# EUROPÄISCHE PATENTSCHRIFT

(11) **EP 3 792 557 B1**
(45) Veröffentlichungstag und Bekanntmachung des Hinweises auf die Patenterteilung: **12.06.2024**
(21) Anmeldenummer: 20195372.6
(22) Anmeldetag: 09.09.2020
(51) Int. Cl.: F24D 12/02

(54) **HEIZANORDNUNG FÜR GEBÄUDE**
HEATING ASSEMBLY FOR BUILDINGS
DISPOSITIF DE CHAUFFAGE POUR BÂTIMENTS

(30) Priorität: 10.09.2019 DE 202019104998 U
(43) Veröffentlichungstag der Anmeldung: 17.03.2021
(73) Patentinhaber: PLEWA Wärme und Energie GmbH, 92421 Schwandorf-Klardorf (DE)
(72) Erfinder: SCHÜTZE, Harry, 39435 Borne (DE); RICHTER, Ernst-Hermann, 57290 Neunkirchen (DE); SCHULZ, Dietmar, 25746 Heide in Holstein (DE); SIEMSEN, Dieter, 25746 Heide (DE); OPEL, Oliver, 25746 Lohe-Rickelshof (DE)
(74) Vertreter: Hannke Bittner & Partner mbB Regensburg

(56) Entgegenhaltungen:
- DE-U1-202006 004 001
- DE-U1-202012 004 062
- DE-U1-202014 100 472
- US-A1- 2014 238 466

## Beschreibung

Die vorliegende Erfindung bezieht sich auf eine Heizanordnung zum Heizen von Gebäuden. Aus dem Stand der Technik sind diverse Energie- oder Heizkonzepte für Gebäude, insbesondere für Neubauten bekannt. Die vorliegende Erfindung richtet sich insbesondere auf eine Heizanordnung für Ein- oder Zweifamilienhäuser- Für derartige Heizungen ist es bekannt, unterschiedliche Energieträger zu verwenden, wie beispielsweise unmittelbar elektrischen Strom, Gas, Öl oder auch Holz bzw. Pellets. Aus dem Stand der Technik sind weiterhin seit Langem an das jeweilige Gebäude gebundene Energieerzeuger, wie insbesondere Photovoltaikanlagen bekannt.

Ein Problem bei derartigen Energieträgern ist die derzeitige gesetzliche Konstellation, wonach teilweise zur Erlangung einer Baugenehmigung in der Regel nur ein bestimmter Anteil, beispielsweise 25 % zum Eigenverbrauch genutzt werden.

Die US 2014/238466 A1 offenbart ein Heizsystem, das nur beim Start des Systems und bei Netzausfall eine minimale Brennstoffmenge verbrennt, wobei das Heizsystem aus Solarstrom, Netzstrom mit Gas-Backup besteht.

Die DE 20 2014 100472 U1 beschreibt eine Heizvorrichtung, insbesondere Kachel- oder Kaminofen, mit einem Feuerraum zur Verbrennung eines Brennstoffs und eine den Feuerraum zumindest teilweise umgebende Wandung, wobei an einer dem Feuerraum abgewandten Außenseite der Wandung wenigstens ein mit elektrischer Energie erwärmbarer Heizstein angeordnet ist. Ferner ist hier offenabrt, dass der Heizstein über eine Versorgungsleitung mit einem Energieversorgungsnetz verbunden sein kann und/oder mit einer Photovoltaikanlage.

Die DE 20 2006 004001 U1 zeigt eine elektrische Fußbodenheizung mit dünnem Schichtaufbau und daher kurzer Reaktionszeit. Dabei ist eine elektrische Heizmatte auf einem harten anorganischen Schaum-Dämmstoff aufgebracht, wobei auf diesem der eigentliche Bodenbelag verlegt wird.

Der vorliegenden Erfindung liegt daher die Aufgabe zugrunde, eine Heizanordnung zum Heizen von Gebäuden vorzuschlagen, welche eine effiziente Nutzung sämtlicher zur Verfügung stehender Energieträger ermöglicht. Dies wird erfindungsgemäß durch den Gegenstand von Anspruch 1 erreicht. Vorteilhafte Ausführungsformen und Weiterbildungen sind Gegenstand der Unteransprüche.

Eine erfindungsgemäße Heizanordnung zum Heizen von Gebäuden weist eine erste Heizeinrichtung auf, welche eine Feuerstätte und wenigstens eine Einrichtung zu Rauchabführung aufweist, so wie einen Schornstein, der in Strömungsverbindung mit der Feuerstätte steht, um in einem Betriebszustand den Rauch abzuführen. Weiterhin ist eine Verbindungsleitung vorgesehen, welche wenigstens teilweise mit der Feuerstätte in Verbindung steht, um der Feuerstätte Luft zuzuführen.

Weiterhin weist die Heizanordnung eine zweite Heizeinrichtung auf, welche wenigstens ein elektrisches betriebenes Heizelement aufweist sowie eine Energiequelle zur Erzeugung elektrischer Energie für das wenigstens eine Heizelement.

Es wird daher als Heizanordnung eine Kombination aus einer Brennstoffheizeinrichtung, beispielsweise einem Holz- oder Pelletofen vorgeschlagen, mit andererseits einer elektrisch betriebenen Heizeinrichtung. Auf diese Weise wird, wie unten im Einzelnen gezeigt wird, eine besonders bevorzugte Energienutzung erreicht.

Bei einer bevorzugten Ausführungsform ist die Brennstoffheizeinrichtung zur Verbrennung von Festbrennstoffen und insbesondere zur Verbrennung von Holz und/oder Scheitholz geeignet und bestimmt. Dieser Brennstoff eignet sich in besonderer Weise in Kombination mit den hier beschriebenen Heizanordnung.

Eine zusätzliche Einzelfeuerstätte kann sich insbesondere dann günstig auf den Jahres-Primärenergiebedarf des Gebäudes auswirken, wenn sie mit dem Brennstoff "Holz" betrieben wird und dieser Sachverhalt auch in der Berechnung berücksichtigt werden kann.

Besonders bevorzugt handelt es sich bei der Brennstoffheizeinrichtung um eine handbeschickte Feuerstätte.

Bei einer weiteren vorteilhaften Ausführungsform handelt es sich bei der Heizeinrichtung um eine Zentralheizung. Für eine Konfiguraton aus einer Zentralheizung und einer handbeschickten Feuerstätte kann der Primärenergiebedarf errechnet werden. Dabei kann die Zentralheizung einen Strang bilden, die Einzelfeuerstätte den anderen Strang zur Deckung der Heizarbeit darstellen.

Dabei liegt der Erfindung der Gedanke zugrunde, dass sich eine Heizung mit elektrischem Strom und insbesondere eine Stromdirektheizung und ein Kaminofen miteinander ergänzen. Dies führt einerseits zu einer Kostenersparnis beim Gebäudebau und es ist auch eine sehr hohe Energieautarkie bis hin zu 100 % möglich. Daneben können für das hier vorgeschlagene Heizkonzept auch bis zu 100 % erneuerbare Energien eingesetzt werden.

Die Erfindung weist weiterhin den Vorteil einer komfortablen, behaglichen und individuellen bzw. nachhaltigen Wärmeerzeugung auf, wobei durch eine punktgenaue und schnelle Wärmebereitstellung wiederum deutliche Einsparungen möglich sind. Daneben kann ein wasserloses Heizsystem vorgeschlagen werden.

Bevorzugt ist die Heizanordnung wasserlos betreibbar bzw. kommt ohne Wasserkreisläufe und dergleichen aus.

Bei einer weiteren bevorzugten Ausführungsform ist die Heizanordnung mit einer Erwärmungseinrichtung für Wasser und insbesondere einer Erwärmungseinrichtung für Brauchwasser verbindbar. Auch kann die Heizeinrichtung bereits selbst eine derartige Erwärmungseinrichtung aufweisen und insbesondere eine elektrisch betreibbare Erwärmungseinrichtung. insbesondere ist die Heizanordnung bevorzugt mit einer dezentralen elektrischen Brauchwassererwärmung verbunden, die ebenfalls kostengünstig und gebrauchsgesteuert elektrisch erwärmtes Brauchwasser zur Verfügung stellt. Dabei besteht diese Verbindung insbesondere mit der elektrisch betriebenen Heizeinrichtung und/oder der elektrischen Energiequelle.

Dabei ist es möglich, dass die Heizanordnung einen oder mehrere Anschlüsse aufweist, um an ein entsprechendes Wassernetz wie etwa eine Brauchwassernetz angeschlossen zu werden. Weiterhin ist es möglich, dass die Heizanordnung eine oder mehrere Wärmetauschereinrichtungen aufweist, welche die Erwärmung von Wasser ermöglichen.

Die Erfindung versucht hier weiterhin, die derzeitigen baulichen Vorschriften ideal auszunutzen. So kann beispielsweise ein Holzofen als Zusatzheizung für die Erfüllung der Voraussetzung einer KFW-Förderung vorteilhaft sein.

Andererseits kann eine Stromdirektheizung aus Solarstrom anrechenbar sein nach dem Gesetz zu Förderung erneuerbarer Energien im Wärmebereich (EEWärmeG).

Es wird daher gezielt eine Synergie zwischen einem Brennstoffofen und einer elektrisch betriebenen Heizeinrichtung verwirklicht.

Bei einer weiteren bevorzugten Ausführungsform umfasst die Heizanordnung bzw. ein Gebäude für diese Heizeinrichtung eine Lüftungseinrichtung und insbesondere eine dezentrale Lüftungseinrichtung.

Es wird die Schaffung einer Systemlösung für eine weitgehend autarke Gebäudeerwärmung und Energieversorgung erreicht. Dabei sind die Energieträger einerseits selbst erzeugter und gespeicherter Sonnenstrom sowie Brennstoffe, wie beispielsweise Scheitholz.

Bei einer bevorzugten Ausführungsform weist die Energiequelle wenigstens ein Photovoltaikelement auf. Insbesondere ist eine Vielzahl von Photovoltaikelementen bzw. Photovoltaikenergieerzeugern vorgesehen. Dabei kann diese Energiequelle beispielsweise auf dem Dach des zu beheizenden Gebäudes positioniert sein.

Das hier beschriebene System kann weiterhin auch die Baukosten senken, da eine Dämmung einer Energieeffizienzklasse "B" sowie eine "einfache Lüftungstechnik" ausreichen und bevorzugt auch keine Wärmepumpe erforderlich ist.

Derzeit werden beim Bau oder der energetischen Sanierung von Gebäuden die Energieeinsparverordnung, das Energieeinspargesetz sowie das erneuerbare Energien Wärmegesetz angewandt. Diese Gesetze sollen in naher Zukunft im GEG, dem Gebäudeenergiegesetz, zusammengefasst werden. Derzeit ist vorgesehen, dass eine Anrechnung von selbst produziertem und gespeichertem Solarstrom für die Gebäudeerwärmung mittels Stromdirektheizung auf den Primärenergiebedarf ausgeschlossen wird.

Daher schlägt die Erfindung vor, die oben genannte erste Heizeinrichtung, beispielsweise einen Kaminofen, als weitere Wärmequelle in die Konzepte einzubeziehen. Strom wird derzeit mit dem Primärenergiefaktor 1,8, Scheitholz dahingegen mit 0,2 bewertet. Auf diese Weise kann, wie durch die Anmelderin ermittelt wird, ein gesetzeskonformer, spezifischer Primärenergiebedarf erreicht werden. Umgekehrt kann diese Art der Biomassennutzung nicht zur zur Erfüllung des EEWärmeG genutzt werden, jedoch die aus Photovoltaikstrom gespeiste Direktheizung. Auf diese Weise ergibt sich durch eine Stromdirektheizung und beispielsweise einen Kaminofen eine hervorragende Symbiose hinsichtlich des GEG.

Bei einer weiteren bevorzugten Ausführungsform weist die Heizanordnung eine Energiespeichereinrichtung auf, die insbesondere dazu geeignet und bestimmt ist, elektrische Energie zu speichern. Dabei kann es sich insbesondere um einen Batteriespeicher handeln. Bei einer weiteren bevorzugten Ausführungsform ist die Heizanordnung und insbesondere die zweite Heizeinrichtung auch an ein öffentliches Stromnetz anschließbar.

Damit gehören zu Komponenten einer bevorzugten Ausgestaltung bevorzugt zumindest eine Photovoltaikanlage, eine elektrische Speichereinrichtung, wie insbesondere aber nicht ausschließlich ein Batteriespeicher, eine elektrische Heizung, insbesondere eine Elektrodirektheizung und eine Heizeinrichtung mit Brennstoffen, beispielsweise ein Kaminofen.

Die Photovoltaikanlage produziert den Jahresbedarf an elektrischer Energie für die Heizung und bevorzugt auch für alle elektrischen Verbraucher, wie beispielsweise Warmwasseraufbereitung, Lüftung, Tagesverbrauch und dergleichen. Ein Stromspeicher speichert bevorzugt nicht direkt benötigten Solarstrom und stellt ihn zum Zeitpunkt des Bedarfs zur Verfügung. Durch die Vernetzung der Stromspeicher über das öffentliche Stromnetz (Schwarmspeicher) wird eine mögliche Unterversorgung bevorzugt ausgeglichen. Ein "Winterloch" wird bevorzugt vom Schwarmbetreiber durch alternative regenerative Energiequellen und bevorzugt durch sogenannten Regelstrom ausgeglichen.

Daneben ist wie oben erwähnt auch ein Strombezug aus dem öffentlichen Netz jederzeit möglich.

Die hier beschriebene erste Heizeinrichtung, beispielsweise der Kaminofen, ist zur konformen Berechnung des Primärenergiebedarfs vorteilhaft. Weiterhin wird er insbesondere bei hohem Wärmebedarf und/oder für eine Komfortheizung eingesetzt, so dass z.B. im Winter bei geringer Stromproduktion weniger Netzstrom und mehr erneuerbarer Brennstoff genutzt wird. Damit wird auch eine ökologische und netzverträgliche Form der Wärmebereitstellung erreicht. Neben den bekannten Vorteilen eines derartigen Kaminofens (die in der Behaglichkeit, Flexibilität, Individualität, Wirtschaftlichkeit, Unabhängigkeit und Nachhaltigkeit bestehen), könnte man beispielsweise auch durch intelligentes Heizen Geld verdienen, indem man durch den Einsatz der ersten Heizeinrichtung einen Strombedarf verringert und so den Netzen Energie zu Verfügung stellt, die vergütet wird.

Bei einer weiteren bevorzugten Ausführungsform weist das elektrische betriebene Heizelement wenigstens ein flächiges Heizelement auf. Unter einem flächigen Heizelement wird ein Heizelement verstanden, welches sich in einer ersten Richtung (etwa einer Längenrichtung), einer zu der ersten Richtung senkrechten zweiten Richtung (etwa einer Breitenrichtung) und einer zu der Längenrichtung und der Breitenrichtung senkrechten dritten Richtung (etwa einer Dickenrichtung) erstreckt, wobei die Erstreckung in der Dickenrichtung wesentlich geringer ist als die Erstreckung in der Längenrichtung und/oder Breitenrichtung. Unter wesentlich geringer wird dabei eine Erstreckung um weniger als 40 % (bezogen auf die Längen- oder Breitenrichtung), bevorzugt um weniger als 30 %, bevorzugt um weniger als 20 % und besonders bevorzugt um weniger als 10 % verstanden.

Eine derartige Folienheizung hat sich als besonders effizient für die Erwärmung von Räumen erwiesen. Derartige Folienheizungen sind sehr einfach zu montieren und bieten eine effiziente Nutzung der eingesetzten Energie in Form von Wärmestrahlung.

Bevorzugt sind diese Folienheizungen unterhalb eines Bodenbelags (Stoff, Laminat, Parkett, PVC, Fliese, etc.) installiert und müssen insbesondere keine Estrichschichten erwärmen. Daher ist eine derartige Heizeinrichtung auch sehr reaktionsschnell, das heißt sie schafft rasch behagliche Wärme mit minimaler Vorlaufzeit und hat auch keine Latenzzeit beim Herunterfahren.

Es ist eine Steuerungseinrichtung zum Steuern der elektrischen Heizeinrichtung vorgesehen. So kann beispielsweise eine Smart-Home-Steuerung vorgesehen sein. Weiterhin können auch Sensoren vorgesehen sein, welche zum Steuern dieser zweiten Heizeinrichtung dienen, wie insbesondere aber nicht ausschließlich Temperatursensoren. Auf diese Weise kann rasch auf Temperaturänderungen reagiert werden. Bevorzugt ist wenigstens ein Temperatursensor zur Bestimmung einer Außentemperatur des Gebäudes vorgesehen und wenigstens ein Temperatursensor zur Bestimmung einer Innentemperatur des Gebäudes.

Bei einer weiteren bevorzugten Ausführungsform weist die Heizanordnung eine Zeitsteuerung auf. Auf diese Weise kann beispielsweise gesteuert werden, zu welchen Zeitpunkten oder in welchen Zeiträumen die erste Heizeinrichtung und/oder die zweite Heizeinrichtung aktiviert ist.

Daneben ist es auch möglich, dass ein Benutzer eine gewünschte Temperatureinstellung vornimmt oder auch eine wetterbedingte Einstellung durchgeführt wird. Dabei ist es möglich, dass eine derartige Steuerungseinrichtung auch Daten der ersten Heizeinrichtung verwendet, beispielsweise Einstellungen der ersten Heizeinrichtung oder Werte, die sich auf die abgegebene Wärme der ersten Heizeinrichtung beziehen. Grundsätzlich eignen sich alle Flächen und trockenen Böden zur schwimmenden Verlegung von Heizfolien. Besonders bevorzugt sind die Heizfolien daher schwimmend verlegt. Sie können sich sowohl für Neubauten als auch zum Nachrüsten in Bestandbauten einigen.

Daneben ist auch eine nasse Verlegung möglich, diese bedarf jedoch einer anderen Montageart. Eine Inbetriebnahme von Heizfolien in Neubauten sollte bevorzugt erst nach vollständiger Trocknung des Estrichs erfolgen.

Besonders bevorzugt handelt es sich bei den Heizelementen um Carbonheizfolien. Carbonheizfolien sind die dünnste Variante der elektrischen Fußbodenheizung und weisen eine Dicke auf, die bevorzugt zwischen 0,3 mm und 2 mm liegt.

Durch ihre niedrige Höhe besitzt die Heizfolie damit den großen Vorteil, gegenüber den wasserführenden Fußbodenheizungen. Die Heizelemente der Heizfolie können dabei bevorzugt als elektrisch leitende Beschichtung auf einem Träger, beispielsweise Glasfasergewebe aufgebracht sein.

Bevorzugt sind diese elektrisch leitenden Beschichtungen insbesondere für eine Isolierung in eine Polyesterfolie eingeschweißt (laminiert).

Bevorzugt wird über eingebrachte Kupferbänder, beispielsweise zwei eingebrachte Kupferbänder an den beiden Randseiten (etwa einer rechten und linken Seite), die als Hauptleiter dienen, der elektrische Strom in die Heizfolie zu den Karbonbändern geleitet und bevorzugt in Wärme umgeleitet.

Bevorzugt erwärmt sich die komplette beschichtete Fläche (etwas abgesehen von einem Rand von ca. 3 cm) innerhalb der Heizfolie gleichmäßig und sorgt so für die gesamten verlegten Bahnen für eine angenehme Wärme. Aufgrund ihrer flächigen Wärmewirkung erzeugen Heizfolien nicht nur Bodenwärme, sondern heizen auch den gesamten Raum gleichmäßig auf.

Besonders bevorzugt wird diese Heizeinrichtung, insbesondere eine Elektroheizung, direkt über das Stromnetz des Hauses versorgt, an das bevorzugt ein separater Stromkreis für die Elektrofußbodenheizung angeschlossen wird. Über einen optionalen eigens installierten Temperaturregler wird die Wärme der Heizelemente, beispielsweise der Heizfolie, gesteuert. Weiterhin können in einem Bereich der Heizfolie, beispielsweise unter der Heizfolie Temperaturfühler bzw. Temperatursensoren vorgesehen sein, welche einen bedarfsgerechten und sparsamen Heizbetrieb ermöglichen.

Heizfolien wandeln die eingespeiste elektrische Energie nahezu zu 100 % in Wärme um, weshalb sie im Vergleich zu einer Nachtspeicherheizung als effizient bezeichnet werden können. Die Heizkosten für die elektrische Fußbodenheizung errechnen sich durch den Stromverbrauch, der sich aus der Heizleistung und Heizdauer ergibt. Bei einer weiteren bevorzugten Ausführungsform weist die Heizanordnung eine Steuerungseinrichtung auf, welche die erste Heizeinrichtung und die zweite Heizeinrichtung steuert. Dabei können insbesondere auch jeweilige Messdaten von der ersten und zweiten Heizeinrichtung, beispielsweise Temperaturwerte, Stellungen von Sauerstoffklappen, elektrische Daten und dergleichen für die Steuerung verwendet werden.

Bei einer weiteren bevorzugten Ausführungsform sind die Feuerstätte und der Kamin als bauliche Einheit ausgeführt. Dabei ist es möglich, diese bauliche Einheit, die beispielsweise sowohl den Schornstein als auch die Feuerstätte enthält, unmittelbar in ein Gebäude, beispielsweise bereits in der Bauphase einzubringen. So kann beispielsweise der Kamin eine Betonummantelung aufweisen, welche auch die Feuerstätte enthält. Bei einer bevorzugten Ausführungsform sind die Feuerstätte und der Kamin in einer gemeinsamen Ummantelung angeordnet.

Bei einer bevorzugten Ausführungsform weist diese Ummantelung einen konstanten Querschnitt auf. Auf diese Weise kann der Einbau in ein Gebäude erleichtert werden. Bei einer weitere bevorzugte Ausführungsform hat die erste Heizeinrichtung eine im Wesentlichen quaderförmige Gestalt.

Bei einer weiteren bevorzugten Ausführungsform ist die Feuerstätte zum Verbrennen von Holz und/oder Pellets geeignet und bestimmt. Bevorzugt weist die Vorrichtung eine Verbrennungsreste-Entfernungseinrichtung, insbesondere eine Asche-Entsorgungseinrichtung auf. Hierbei kann es sich um einen an sich aus dem Stand der Technik bekannten Aschekasten handeln, der bevorzugt unterhalb der Feuerstätte angeordnet ist und der zum Entleeren aus der Vorrichtung herausgezogen werden kann. Vorteilhaft kann dabei dieser Aschekasten in einer Richtung herausgezogen werden, welche senkrecht zu einer der beiden Flächen der Feuerstätte, welche geöffnet werden können, steht.

Bevorzugt auch eine Feuerraumtür vorgesehen, welche um eine vorgegebene Schwenkachse zum Öffnen und Schließen eines Befeuerungsraumes schwenkbar ist.

Bevorzugt handelt es sich bei der Feuerraumtür um eine selbstschließende Türe. Diese Selbstschließefunktion wird dabei bevorzugt mittels eines Zylinders, insbesondere eines hydraulischen Zylinders gewährleistet, sowie bevorzugt durch einen Hebelarm. Daneben ist bevorzugt die Feuerraumtür gegenüber dem Gehäuse bzw. Korpus mittels eines Dichtmittels abgedichtet. Bei diesem Dichtmittel kann es sich beispielsweise um eine Textilfaserschnur handeln, die bevorzugt dauerhaft dicht befestigt ist.

Bevorzugt weist die Feuerraumtür einen ersten Abschnitt auf, sowie einen zweiten Abschnitt, welche gegenüber einander abgewinkelt sind. Wie oben erwähnt, sind bevorzugt die hier erwähnten Einrichtungen, das heißt die Feuerstätte, der Kamin und auch die Feuerraumtür als Modul ausgebildet und die gesamte Vorrichtung kann als Modul beispielsweise in Häuser eingebaut werden.

Unter abgewinkelt wird verstanden, dass sich der erste Abschnitt in einer ersten Ebene erstreckt, welche in einem Einbauzustand insbesondere vertikal verläuft und der zweite Abschnitt in einer hierzu abgewinkelten Ebene, welche jedoch ebenfalls bevorzugt vertikal verläuft.

Es wäre jedoch auch denkbar, dass die Vorrichtung für andere Brennstoffe, wie beispielweise Öl, Gas und dergleichen geeignet und bestimmt ist.

Bei einer weiteren vorteilhaften Ausführungsform weist die Vorrichtung eine unterhalb der Feuerstätte vorgesehene Blende auf, in der insbesondere ein Gitter für Verbrennungsluftzufuhr angeordnet ist. Dabei kann vorteilhaft ein Strömungsquerschnitt der durch dieses Gitter tretenden Luft verändert werden. Bevorzugt ist eine Antriebseinrichtung vorgesehen, mit der eine Stellung dieses Gitters gesteuert und/oder geregelt werden kann. Dabei kann diese Antriebseinrichtung bevorzugt von einer Steuerungseinrichtung gesteuert werden, die besonders bevorzugt auch zum Steuern der zweiten Heizeinrichtung dient.

Bevorzugt erfolgt die Verbrennungsluftzufuhr in den Feuerraum über einen Verbrennungsluftansaugstutzen, der bevorzugt rechteckig ausgeführt ist und der bevorzugt in einem Bereich einer Rückwand und insbesondere in einem oberen Bereich einer Rückwand des Feuerstätteneinsatzes angeordnet ist. Bevorzugt erfolgt die Zufuhr in einen an der Rückwand des Einsatzes angeordneten Luftkasten. Bevorzugt wird mit dem Luftkasten die Verbrennungsluft durch Bohrungen in der Stahlblechrückwand des Einsatzes und/oder Bohrungen in den Feuerraum-Rückwandschamotteseiten oberhalb des Feuerraumbodens den Feuerraum zugeführt.

Die Steuerung der Verbrennungsluft erfolgt vorteilhaft über einen Regler und insbesodere einen Schieberegler, welcher besonders bevorzugt oberhalb der Feuerraumöffnung angebracht ist. Bevorzugt kann dieser Schieberegler nur bei geöffneter Feuerraumtür betätigt werden.

Bevorzugt erfolgt einer Verbindung zwischen einem Ringspalt des Luft-Abgas-Schornsteins und der Lufteintrittsöffnung des Feuerstätteneinsatzes über eine Verbrennungsluftleitung, welche insbesondere senkrecht angeordnet ist und welche bevorzugt nicht wärmegedämmt ist. Diese Verbrennungsluftleitung weist bevorzugt eine Wanddicke von mindestens 3mm auf.

Bevorzugt ist diese Verbrennungsluftleitung über eine Flanschverbindung mit einem auf dem Feuerstätteneinsatz befestigten und insbesondere verschweißten Anschlussstutzen dicht verbunden. Bevorzugt mündet diese Verbrennungsluftleitung in dem Ringspalt des Luft-Abgas-Schornsteins. Besonders bevorzugt ist in dieser Verbrennungsluftleitung eine Öffnung und insbesondere eine Revisionsöffnung vorgesehen. Diese Öffnung ist besonders bevorzugt durch eine obere Konvektionsluftöffnung zugänglich.

Daneben kann der Heizeinsatz auch wasserführende Elemente aufweisen. Dabei kann der Feuerraum eine insbesodnere wärmegedämmte Wassertasche aufweisen. Diese Wassertasse kann dabei zumindest teilweise den Feuerraum umgeben. Dabei können mehrere Anschlüsse vorgesehen sein, wie etwa einen Heizwasservorlauf, einen Heizwasserrücklauf oder einen Kaltwasseranschluss. Diese Anschlüsse sind bevorzugt auf der Rückseite des Heizeinsatzes angeordnet. Für diese wasserführenden Elemente kann weiterhin eine Pumpe, insbesondere eine Zirkulationspumpe vorgesehen sein.

Bei einer weiteren vorteilhaften Ausführungsform ist auch eine Ausführeinrichtung für Konvektionsluft vorgesehen. Diese ist insbesondere oberhalb der Feuerstätte vorgesehen und führt insbesondere in einen zu beheizenden Raum. Bei einer weiteren vorteilhaften Ausführungsform ist der Austritt der Verbrennungsluft in den Schornstein integriert. Wie oben erwähnt, ist damit bevorzugt oberhalb und/oder unterhalb und bevorzugt oberhalb und unterhalb der Feuerstätte in der Verkleidung wenigstens ein Lüftungsgitter und bevorzugt mehrere Lüftungsgitter für die Konvektion von Luft angeordnet.

Bei einer weiteren vorteilhaften Ausführungsform ist der Schornstein als LAS-Schornstein (Luft-Abgas-System). Bei einem Luft-Abgas-System (auch Luft-Abgas-Schornstein (LAS) genannt) werden die warmen Abgase und die kühle Zuluft einer Heizungsanlage bevorzugt durch zwei flächig verbundene, aber bevorzugt getrennte Leitungen geführt. Dabei kann den warmen Abgasen die Restwärme weiter entzogen werden. Dabei kann dieser Schornstein einen weiteren Luftschacht aufweisen, durch den (wenigstens teilweise, gegebenenfalls aber auch ausschließlich) der Feuerstätte Luft für die Verbrennung zugeführt werden kann.

Bei einer weiteren vorteilhaften Ausführungsform weist die Vorrichtung eine Steuerungsreinrichtung auf, um die Menge der für die Verbrennung zugeführten Luft zu steuern. Bei dieser Steuerungseinrichtung kann es sich insbesondere um mechanisch betätigbare Steuerungseinrichtungen wie beispielsweise mechanische betätigbare Belüftungsklappen handeln. So kann beispielsweise ein Bedienhebel für eine Verbrennungsluftzufuhr vorgesehen sein.

Bei einer weiteren vorteilhaften Ausführungsform ist die Vorrichtung raumluftabhängig und/oder raumluftunabhängig betreibbar. Bei einem raumluftunabhängigen Betrieb wird die Verbrennungsluft über den Schacht und/oder Kamin zugeführt bzw. eingesaugt. Bei einem raumluftabhängigen Betrieb wird die Verbrennungsluft aus dem (Innen)raum zugeführt und/oder eingesaugt. Zum Zuführen der Verbrennungsluft aus dem Raum kann beispielsweise eine Zuführöffnung unterhalb der Feuerstätte vorgesehen sein.

Bei einer weiteren bevorzugten Ausführungsform ist die Verbrennungsluft wahlweise über den Schacht und/oder Kamin oder dem Verbtrennungsraum zuführbar. So kann eine Stelleinrichtung vorgesehen sein, welche dieses wahlweise Zuführen der Verbrennungsluft ermöglicht. Diese Stelleinrichtung kann dabei insbesondere mechanisch betätigbar sein. Auch wäre es möglich, dass die Stelleinrichtung eine teilweise Zuführung von Raumluft und eine teilweise Zuführung von Luft aus dem Schacht und/oder Kamin ermöglicht. Dabei könnten insbesondere die jeweiligen prozentualen Anteile geregelt und/oder gesteuert werden.

Bei einer weiteren bevorzugten Ausführungsform ist die zweite Heizeinrichtung in einen Boden eines zu wärmenden Raumes integriert.

Bei einer weiteren vorteilhaften Ausführungsform weist die Feuerstätte einen Feuerstätteneinsatz auf, der bevorzugt aus Stahlblech hergestellt ist. Bevorzugt weist ein Feuerraum der Feuerraum senkrechte Wände auf und/oder einen bevorzugt flachen Feuerraumboden, die besonders bevorzugt ausschamottiert sind.

Dieser Feuerraum ist bevorzugt nach oben hin durch eine horizontal angeordnete Platte und insbesondere eine Vermiculitplatte abgeschlossen. Diese Platte weist bevorzugt eine Öffnung und insbesondere eine kreisrunde Öffnung auf, insbesonder für die Heizgase.

Die vorliegende Erfindung ist weiterhin auf ein Verfahren zum Betreiben einer Heizanordnung zum Heizen von Gebäuden gemäß Anspruch 11 gerichtet.

Dabei steuert bevorzugt eine Steuerung, welche der Heizeinrichtungen in welchem Umfang betrieben werden. Auch ist es möglich, dass beide Heizeinrichtungen gleichzeitig betrieben werden.

Weiterhin ist es möglich, dass die erste Einrichtung und insbesondere die erste Heizeinrichtung in Abhängigkeit von Messwerten gesteuert wird, welche eine Temperatur, eine elektrische Leistung und dergleichen enthält.

Weiterhin ist es auch möglich, dass die zweite Heizeinrichtung wenigstens zeitweise von einem externen elektrischen Stromnetz betrieben wird.

Weitere Vorteile und Ausführungsformen ergeben sich aus den beigefügten Zeichnungen.

Darin zeigen:
- Fig. 1: eine grob schematische Darstellung einer erfindungsgemäßen Heizanordnung;
- Fig. 2: eine Darstellung der elektrischen Heizeinrichtung; und
- Fig. 3: eine Darstellung einer brennstoffbetriebenen Heizeinrichtung.

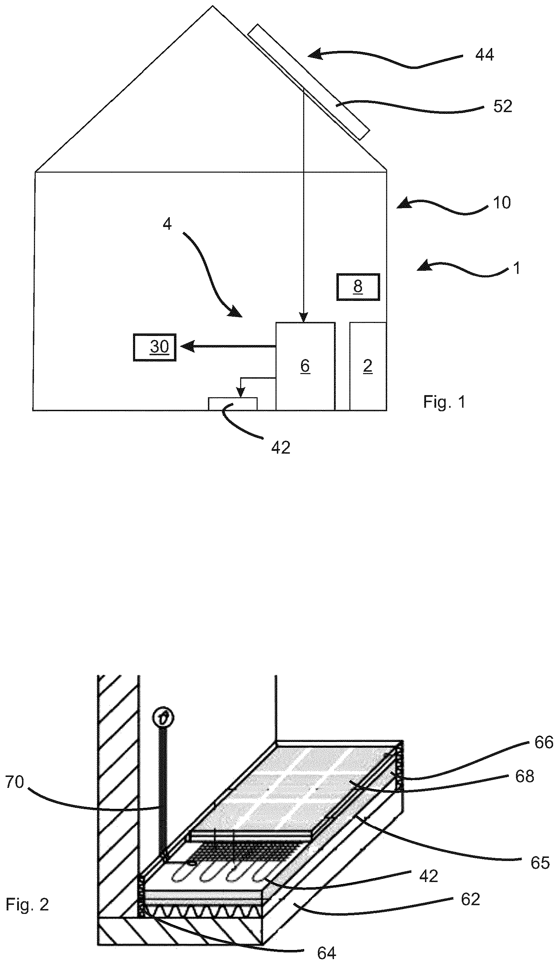

Fig. 1 zeigt eine Darstellung einer erfindungsgemäßen Heizanordnung. Dabei bezieht sich das Bezugszeichen 10 auf ein Gebäude, in welches die Heizanordnung 1 integriert ist. Die Heizanordnung weist eine erste Heizeinrichtung 2 auf, bei der es sich hier um einen Kaminofen handelt.

Daneben weist die Heizanordnung 1 eine zweite Heizeinrichtung 4, bei der es sich um eine elektrische Heizeinrichtung handelt und die über mehrere Komponenten verfügt.

Das Bezugszeichen 44 kennzeichnet eine Energiequelle, die hier als Photovoltaikanlage mit einer Vielzahl von Photovoltaikzellen ausgebildet ist. Das Bezugszeichen 42 kennzeichnet hier grob ein Heizelement, welches beispielsweise in einen Boden des Hauses oder des Raumes eingebaut sein kann

Das Bezugszeichen 6 kennzeichnet eine Energiespeichereinrichtung, die einerseits zum Versorgen des Heizelements dient, andererseits aber auch zum Versorgen weiterer elektrischer Abnehmer dienen kann.

Das Bezugszeichen 8 kennzeichnet eine Steuerungseinrichtung, die zum Steuern beider Heizeinrichtungen dient. Dabei kann gesteuert werden, welche der beiden Heizeinrichtungen aktiviert wird und ggfs. Auch in welchem Umfang. Die Steuerungseinrichtung 8 kann dabei auch Daten von Sensoreinrichtungen, etwa von (nicht gezeigten) Temperatursensoren verwenden.

Figur 2 zeigt eine Darstellung der zweiten Heizeinrichtung, bei der es sich hier um eine elektrisch betriebene Heizeinrichtung handelt. Dabei bezieht sich das Bezugszeichen 62 auf eine Rohdecke eines Gebäudes bzw. einen Rohbodenabschnitt. Das Bezugszeichen 64 kennzeichnet einen Dämmelement, wie etwa einen Randdämmstreifen. Das Bezugszeichen 65 kennzeichnet ein flächiges Dämmelement. Das Bezugszeichen 66 kennzeichnet eine Estrichschicht, welche ggfs. auch mit einer Dämmung ausgeführt ist. Das Bezugszeichen 42 kennzeichnet ein Heizelement, das hier als Heizmatte ausgeführt ist. Diese Heizmatte kann dabei in einem Kleberbett angeordnet sein. Das Bezugszeichen 68 kennzeichnet einen Bodenbelag wie beispielsweise Fliesen.

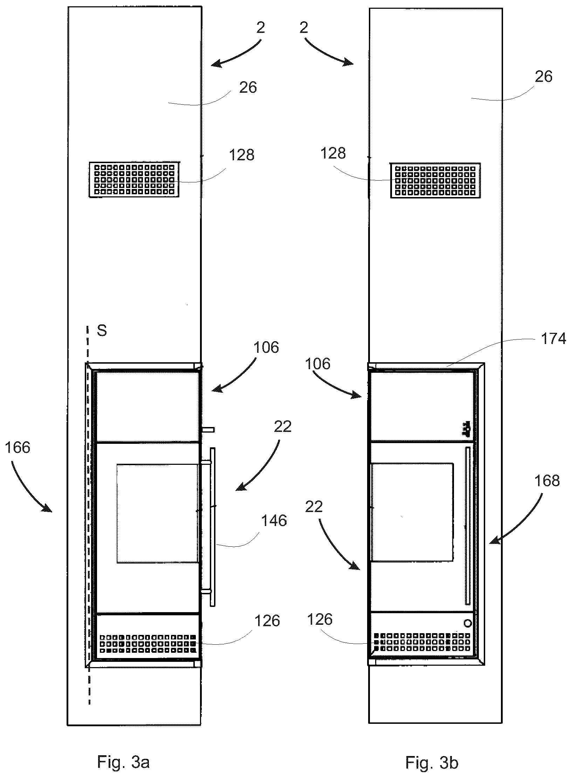

Die Figuren 3a und 3b zeigen zwei Seitendarstellung einer ersten Heizeinrichtung 2, die hier als Kaminofen ausgeführt ist. Dabei bezieht sich das Bezugszeichen 102 auf die eigentliche Feuerstätte, welche wie in den Figuren 3 a und 3 b gezeigt ist, als Einsatz in den Kamin 26 eingebaut ist. Auf diese Weise kann die gesamte Vorrichtung in ihrer Gesamtheit in Gebäuden verbaut werden. Diese Feuerstätte kann dabei beispielsweise zur Aufnahme von Feuerholz geeignet und bestimmt sein.

Das Bezugszeichen 106 zeigt in ihrer Gesamtheit eine Feuerraumtür, welche, wie oben erwähnt, zum Öffnen und Schließen geschwenkt werden kann, und zwar um eine Achse, welche hier vertikal verläuft. Diese Feuerraumtür weist einen ersten Abschnitt 166 und einen zweiten Abschnitt 168 auf, die bezüglich einander um einen Winkel von 90° abgewinkelt sind. Das Bezugszeichen 146 kennzeichnet ein Griffelement, mit dem Feuerraumtür 106 geöffnet bzw. aufgeschwenkt werden kann. Dabei kennzeichnet das Bezugszeichen S in Fig. 3a die entsprechende Schwenkachse, um welche die Feuerraumtür schwenkbar ist.

Das Bezugszeichen 126 kennzeichnet ein erstes Gitter zum Einsaugen von Konvektionsluft und das Bezugszeichen 128 kennzeichnet ein zweites Gitter, über welches beispielsweise Konvektionsluft abgegeben werden kann. Die Feuerraumtür 106 weist einen Türanschlag mit einer Glaskeramik auf, sodass der Benutzer in die Feuerstätte einsehen kann und insbesondere auch das brennende Feuer von Holz oder dergleichen beobachten kann.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Heizanordnung (1) zum Heizen von Gebäuden mit einer ersten Heizeinrichtung (2), welche eine Feuerstätte (22), und wenigstens eine Einrichtung zur Rauchabführung aufweist, sowie einen Schornstein (26), der in Strömungsverbindung mit der Feuerstätte (22) steht, um in einem Betriebszustand den Rauch abzuführen und mit einer Verbindungsleitung, welche wenigstens teilweise mit der Feuerstätte in Verbindung steht, um der Feuerstätte (22) Luft zuzuführen, mit einer zweiten Heizeinrichtung (4), welche wenigstens ein elektrisch betriebenes Heizelement (42) aufweist, sowie eine Energiequelle (44) zur Erzeugung elektrischer Energie für das wenigstens eine Heizelement (42) und wobei die zweite Heizeinrichtung (4) in einen Boden eines zu erwärmenden Raumes integriert ist, und wobei die Heizanordnung (1) ferner eine Steuerungseinrichtung (8) aufweist, welche die erste Heizeinrichtung (2) und die zweite Heizeinrichtung (4) steuert.

2. Heizanordnung (1) nach Anspruch 1,
**dadurch gekennzeichnet, dass**
die Energiequelle (44) wenigstens ein Photovoltaikelement (52) aufweist.

3. Heizanordnung (1) nach wenigstens einem der vorangegangenen Ansprüche,
**dadurch gekennzeichnet, dass**
die Heizanordnung (1) eine Energiespeichereinrichtung (6) aufweist.

4. Heizanordnung (1) nach wenigstens einem der vorangegangenen Ansprüche,
**dadurch gekennzeichnet, dass**
die Heizanordnung (1) und insbesondere die zweite Heizeinrichtung (4) dazu geeignet und bestimmt ist, elektrische Energie aus einem öffentlichen Stromnetz zu beziehen.

5. Heizanordnung (1) nach wenigstens einem der vorangegangenen Ansprüche,
**dadurch gekennzeichnet, dass**
das elektrisch betriebene Heizelement (42) wenigstens ein flächiges Heizelement (54) aufweist.

6. Heizanordnung (1) nach wenigstens einem der vorangegangenen Ansprüche,
**dadurch gekennzeichnet, dass**
wenigstens die Feuerstätte (22) und der Kamin (26) als bauliche Einheit ausgeführt sind.

7. Heizanordnung (1) nach wenigstens einem der vorangegangenen Ansprüche,
**dadurch gekennzeichnet, dass**
die Feuerstätte (22) zum Verbrennen von Holz und/oder Pellets geeignet und bestimmt ist.

8. Heizanordnung (1) nach wenigstens einem der vorangegangenen Ansprüche,
**dadurch gekennzeichnet, dass**
die Heizanordnung (1) eine Zuführeinrichtung (128) zum Zuführen von Konvektionsluft aufweist.

9. Heizanordnung (1) nach wenigstens einem der vorangegangenen Ansprüche,
**dadurch gekennzeichnet, dass**
die Heizanordnung (1) die
Steuerungseinrichtung (8) aufweist, um eine Menge der
für die Verbrennung zugeführten Luft zu steuern.

10. Heizanordnung (1) nach wenigstens einem der vorangegangenen Ansprüche,
**dadurch gekennzeichnet, dass**
die Heizanordnung (1) und insbesondere die zweite Heizeinrichtung (4) mit einer Erwärmungseinrichtung und/oder einer Versorgungseinrichtung für Wasser verbindbar ist.

11. Verfahren zum Betreiben einer Heizanordnung (1), wobei diese Heizanordnung zum Heizen von Gebäuden eine erste Heizeinrichtung (2) aufweist, welche eine Feuerstätte (22) aufweist, sowie wenigstens eine Einrichtung zur Rauchabführung und einen Schornstein (26), der wenigstens zeitweise in Strömungsverbindung mit der Feuerstätte (22) steht, und in einem Betriebszustand Rauch abführt und mit einer Verbindungsleitung, welche wenigstens teilweise mit der Feuerstätte (22) in Verbindung steht, und welche der Feuerstätte (22) Luft zuführt und wobei eine zweite Heizeinrichtung (4) vorgesehen ist, welche wenigstens ein elektrisch betriebenes Heizelement (42) aufweist sowie eine Energiequelle (44), welche elektrische Energie für das wenigstens eine Heizelement (42) erzeugt, wobei wenigstens zeitweise das Gebäude mittels der ersten Heizeinrichtung (2) und wenigstens teilweise bzw. zeitweise mittels der zweiten Heizeinrichtung (4) beheizt wird, wobei die zweite Heizeinrichtung (4) in einen Boden eines zu erwärmenden Raumes integriert ist, und wobei die Heizanordnung (1) eine Steuerungseinrichtung (8) aufweist, mittels welcher die erste Heizeinrichtung (2) und die zweite Heizeinrichtung (4) gesteuert werden.

## Claims

1. Heating arrangement (1) for heating buildings, having a first heating device (2) which has a fireplace (22) and at least one device for discharging smoke, as well as a chimney (26) which is in flow connection with the fireplace (22) in order to discharge the smoke in an operating state, and having a connecting line which is at least partially connected to the fireplace in order to supply air to the fireplace (22), with a second heating device (4), which has at least one electrically operated heating element (42), as well as an energy source (44) for generating electrical energy for the at least one heating element (42) and wherein the second heating device (4) is integrated into a floor of a room to be heated, and wherein the heating arrangement (1) furthermore has a control device (8) which controls the first heating device (2) and the second heating device (4).

2. Heating arrangement (1) according to claim 1,
**characterized in that**
the energy source (44) has at least one photovoltaic element (52).

3. Heating arrangement (1) according to at least one of the preceding claims,
**characterized in that**
the heating arrangement (1) has an energy storage device (6).

4. Heating arrangement (1) according to at least one of the preceding claims,
**characterized in that**
the heating arrangement (1) and in particular the second heating device (4) is suitable and intended for drawing electrical energy from a public power grid.

5. Heating arrangement (1) according to at least one of the preceding claims,
**characterized in that**
the electrically operated heating element (42) has at least one flat heating element (54).

6. Heating arrangement (1) according to at least one of the preceding claims,
**characterized in that**
at least the fireplace (22) and the chimney (26) are designed as a structural unit.

7. Heating arrangement (1) according to at least one of the preceding claims,
**characterized in that**
the fireplace (22) is suitable and intended for burning wood and/or pellets.

8. Heating arrangement (1) according to at least one of the preceding claims,
**characterized in that**
the heating arrangement (1) has a supply device (128) for supplying convection air.

9. Heating arrangement (1) according to at least one of the preceding claims,
**characterized in that**
the heating arrangement (1) comprises the control device (8) for controlling a quantity of air supplied for combustion.

10. Heating arrangement (1) according to at least one of the preceding claims,
**characterized in that**
the heating arrangement (1) and in particular the second heating device (4) can be connected to a heating device and/or a supply device for water.

11. Method for operating a heating arrangement (1), wherein this heating arrangement for heating buildings having a first heating device (2) which has a fireplace (22), as well as at least a device for removing smoke and a chimney (26) which is at least temporarily in flow connection with the fireplace (22) and, in an operating state, removes smoke and has a connecting line which is at least partially connected to the fireplace (22) and which supplies air to the fireplace (22), and wherein a second heating device (4) being provided which has at least one electrically operated heating element (42) and an energy source (44) which generates electrical energy for the at least one heating element (42), wherein at least temporarily the building is heated by means of the first heating device (2) and at least partially or temporarily by means of the second heating device (4), wherein the second heating device (4) is integrated into a floor of a room to be heated, and wherein the heating arrangement (1) has a control device (8) by means of which the first heating device (2) and the second heating device (4) are controlled.

## Revendications

1. Ensemble de chauffage (1) pour chauffer des bâtiments avec un premier dispositif de chauffage (2), lequel présente un foyer (22) et au moins un dispositif d'évacuation de la fumée, ainsi qu'une cheminée (26), qui se trouve en communication fluidique avec le foyer (22) pour évacuer dans un état de fonctionnement la fumée, et avec une conduite de raccordement, laquelle est raccordée au moins en partie au foyer pour amener de l'air au foyer (22), avec un deuxième dispositif de chauffage (4), lequel présente au moins un élément de chauffage (42) fonctionnant de manière électrique ainsi qu'au moins une source d'énergie (44) destinée à produire de l'énergie électrique pour l'au moins un élément de chauffage (42), et dans lequel le deuxième dispositif de chauffage (4) est intégré dans un fond d'un espace à réchauffer, et dans lequel l'ensemble de chauffage (1) présente en outre un dispositif de commande (8), lequel commande le premier dispositif de chauffage (2) et le deuxième dispositif de chauffage (4).

2. Ensemble de chauffage (1) selon la revendication 1,
**caractérisé en ce que**
la source d'énergie (44) présente au moins un élément photovoltaïque (52).

3. Ensemble de chauffage (1) selon au moins l'une quelconque des revendications précédentes,
**caractérisé en ce que**
l'ensemble de chauffage (1) présente un dispositif accumulateur d'énergie (6).

4. Ensemble de chauffage (1) selon au moins l'une quelconque des revendications précédentes,
**caractérisé en ce que**
l'ensemble de chauffage (1) et en particulier le deuxième dispositif de chauffage (4) sont adaptés pour et se destinent à fournir de l'énergie électrique provenant d'un réseau électrique public.

5. Ensemble de chauffage (1) selon au moins l'une quelconque des revendications précédentes,
**caractérisé en ce que**
l'élément de chauffage (42) fonctionnant de manière électrique présente au moins un élément de chauffage plat (54).

6. Ensemble de chauffage (1) selon au moins l'une quelconque des revendications précédentes,
**caractérisé en ce que**
au moins le foyer (22) et la cheminée (26) sont réalisés en tant qu'unité modulaire.

7. Ensemble de chauffage (1) selon au moins l'une quelconque des revendications précédentes,
**caractérisé en ce que**
le foyer (22) est adapté pour et se destine à brûler du bois et/ou des granulés.

8. Ensemble de chauffage (1) selon au moins l'une quelconque des revendications précédentes,
**caractérisé en ce que**
l'ensemble de chauffage (1) présente un système d'amenée (128) destiné à amener de l'air de convection.

9. Ensemble de chauffage (1) selon au moins l'une quelconque des revendications précédentes,
**caractérisé en ce que**
l'ensemble de chauffage (1) présente le dispositif de commande (8) pour commander une quantité de l'air amené pour la combustion.

10. Ensemble de chauffage (1) selon au moins l'une quelconque des revendications précédentes,
**caractérisé en ce que**
l'ensemble de chauffage (1) et en particulier le deuxième dispositif de chauffage (4) peuvent être raccordés à un dispositif de réchauffage et/ou à un dispositif d'alimentation en eau.

11. Procédé pour faire fonctionner un ensemble de chauffage (1), dans lequel ledit ensemble de chauffage présente pour chauffer des bâtiments un premier dispositif de chauffage (2), lequel présente un foyer (22), ainsi qu'un dispositif d'évacuation de la fumée et une cheminée (26), qui se trouve au moins par intermittence en communication fluidique avec le foyer (22) et évacue dans un état de fonctionnement de la fumée, et avec une conduite de raccordement, laquelle est raccordée au moins en partie au foyer (22) et laquelle amène de l'air au foyer (22), et dans lequel est prévu un deuxième dispositif de chauffage (4), lequel présente au moins un élément de chauffage (42) fonctionnant de manière électrique ainsi qu'une source d'énergie (44), laquelle produit de l'énergie électrique pour l'au moins un élément de chauffage (42), dans lequel le bâtiment est chauffé au moins par intermittence au moyen du premier dispositif de chauffage (2) et au moins en partie ou par intermittence au moyen du deuxième dispositif de chauffage (4), dans lequel le deuxième dispositif de chauffage (4) est intégré dans un fond d'un espace à réchauffer, et dans lequel l'ensemble de chauffage (1) présente un dispositif de commande (8), au moyen duquel le premier dispositif de chauffage (2) et le deuxième dispositif de chauffage (4) sont commandés.
